# FASCICULE DE BREVET EUROPEEN

(11) **EP 1 651 476 B1**
(45) Date de publication et mention de la délivrance du brevet: **27.12.2006**
(21) Numéro de dépôt: 04767713.3
(22) Date de dépôt: 16.07.2004
(51) Int. Cl.: B60R 21/045

(54) **PLANCHE DE BORD POUR ABSORBER L ENERGIE DU CONDUCTEUR**
ARMATURENBRETT ZUR AUFNAHME DER ENERGIE EINES FAHRERS
PANEL BOARD FOR ABSORBING A DRIVER ENERGY

(30) Priorité: 17.07.2003 FR 0308742
(43) Date de publication de la demande: 03.05.2006
(73) Titulaire: Faurecia Interieur Industrie, 92000 Nanterre (FR)
(72) Inventeur: LABORIE, Jean-Michel, F-46270 Bagnac-Sur-Cele (FR)
(74) Mandataire: Arnaud, Jean
(86) Numéro de dépôt international: PCT/FR2004/001889
(87) Numéro de publication internationale: WO 2005/009800

(56) Documents cités:
- US-A- 4 194 762
- US-A- 4 349 214
- US-A- 4 434 999
- US-A- 4 834 422
- US-A- 5 311 960
- US-A- 5 632 507
- US-A- 6 145 880

## Description

L'invention concerne une planche de bord destinée à absorber l'énergie d'un occupant d'habitacle de véhicule en cas de choc.

Il est déjà connu d'équiper l'habitacle d'une multitude de coussins gonflables et de pré-tensionneurs de ceinture pour absorber l'énergie des occupants du véhicule et éviter, ou du moins limiter, leur collision contre la planche de bord.

Toutefois, ces dispositifs sont relativement onéreux. Aussi, il est nécessaire pour certaines gammes de véhicules de prévoir des dispositifs moins sophistiqués.

D'autre part, US-A-4 349 214 décrit une planche de bord comprenant deux panneaux recouverts en partie haute d'une garniture réalisée dans un matériau absorbant les chocs par déformation. Cette garniture est destinée à recevoir les genoux du conducteur en cas de choc. Elle comprend une partie massive s'étendant entre les deux panneaux d'absorption d'énergie et destinée à venir en appui contre la colonne de direction.

Toutefois, cette solution n'est guère satisfaisante dans la mesure où la partie massive de la garniture relie directement la colonne de direction aux genoux du conducteur. Elle est ainsi comprimée lors d'un choc et a par conséquent tendance à opposer une résistance croissant en fonction de son écrasement sous la pression des genoux du conducteur. Or, pour optimiser l'absorption de l'énergie du conducteur, il faudrait que la résistance soit relativement constante sur une grande amplitude. En outre, cette partie massive risque de présenter des défauts d'aspects dus notamment au retrait de la matière lors du refroidissement.

L'invention a pour but de surmonter ces problèmes et de proposer une planche de bord bon marché permettant de réduire le risque de blessures des membres inférieurs du conducteur du véhicule lorsqu'il entre en contact avec la planche de bord.

Pour ce faire, conformément à l'invention, ladite planche de bord comprend une couche en matériau plastique rigide s'étendant continûment sur toute la largeur de l'habitacle du véhicule et une plaque d'absorption en matériau plastique rigide s'étendant en regard de la couche en matériau plastique rigide sur une partie seulement de la planche de bord, ladite plaque d'absorption présente une portion principale s'étendant sensiblement au contact de la couche en matériau plastique rigide et une portion formant une excroissance s'étendant à l'écart de la couche en matériau plastique rigide, de sorte à ménager dans cette portion qui est destinée à venir en regard de la colonne de direction un espace entre la plaque d'absorption et la couche en matériau plastique rigide pour absorber l'énergie de l'occupant par déformation de la plaque d'absorption.

Ainsi, la couche en matériau plastique rigide répartit les efforts sur la plaque d'absorption, tandis que la plaque d'absorption vient en contact de la colonne de direction par l'intermédiaire de son excroissance et se déforme pour absorber l'énergie tant dans la portion formant excroissance que dans la portion principale, en opposant aux genoux du conducteur une résistance sensiblement constante tant que l'excroissance n'est pas complètement écrasée jusqu'à venir au contact de la couche en matériau plastique rigide.

L'espace entre la plaque d'absorption et la couche en matériau plastique rigide permet d'absorber l'énergie du conducteur par déformation de la plaque d'absorption sur une grande amplitude en opposant une résistance relativement constante.

Pour réduire encore le risque de blessure des genoux, conformément à l'invention, ladite plaque d'absorption comprend en outre une portion de raccordement reliant l'excroissance à la portion principale et présentant en section une forme sensiblement en U.

Ainsi, la plaque d'absorption évite la convergence des genoux du conducteur vers la colonne de direction et permet d'absorber une plus grande quantité d'énergie sans risque de blessure corporelle (force résistante sensiblement constante) en favorisant une déformation sans rupture de la plaque de déformation.

Avantageusement, la plaque d'absorption présente des nervures sur l'essentiel de ses deux faces.

On augmente ainsi à faible coût le potentiel d'absorption d'énergie de la plaque d'absorption.

Selon une autre caractéristique avantageuse de l'invention, la plaque d'absorption présente une âme s'étendant, dans la portion principale, sensiblement parallèlement et à l'écart de la couche en matériau plastique rigide, et la plaque d'absorption est fixée à la couche en matériau plastique rigide dans ladite portion principale.

On obtient ainsi un ensemble du type "double coque" constitué par la couche en matériau plastique rigide et la portion principale de la plaque d'absorption, ce qui procure de bonnes caractéristiques d'absorption d'énergie à faible coût.

Pour réduire encore le risque de collision entre les genoux du conducteur et la colonne de direction, conformément à l'invention, la planche de bord comprend en outre une plaque de guidage rigide fixée à la couche en matériau plastique rigide en regard dudit espace.

Ainsi, la planche de bord est renforcée en regard dudit espace et les genoux se trouvent guidés pour venir de part et d'autre dudit espace.

L'invention a en outre pour objet un véhicule équipé d'une planche de bord conforme à l'invention et comprenant deux éléments d'appui liés à la structure du véhicule entre lesquels la plaque de renfort est maintenue.

Ces deux éléments d'appui améliorent le guidage des genoux. En effet, en renforçant le maintien de la plaque d'absorption à ses extrémités, ils évitent que les genoux s'écartent et se retrouvent à l'écart de la plaque d'absorption.

L'invention va apparaître encore plus clairement dans la description qui va suivre, faite en référence aux dessins annexés dans lesquels :
- les figures 1 à 3 illustrent schématiquement, vue de dessus, une planche de bord conforme à l'invention avant choc, en cours de déformation lors du choc et après absorption du choc,

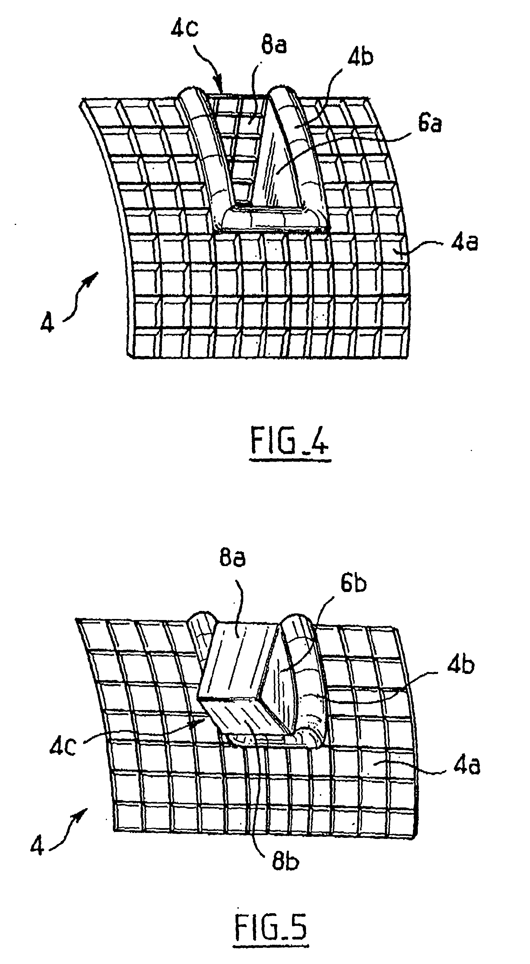

- la figure 4 est une représentation en perspective de la plaque d'absorption seule suivant la flèche repérée IV à la figure 1,
- la figure 5 est une représentation en perspective de la plaque d'absorption suivant la flèche repérée V à la figure 1.

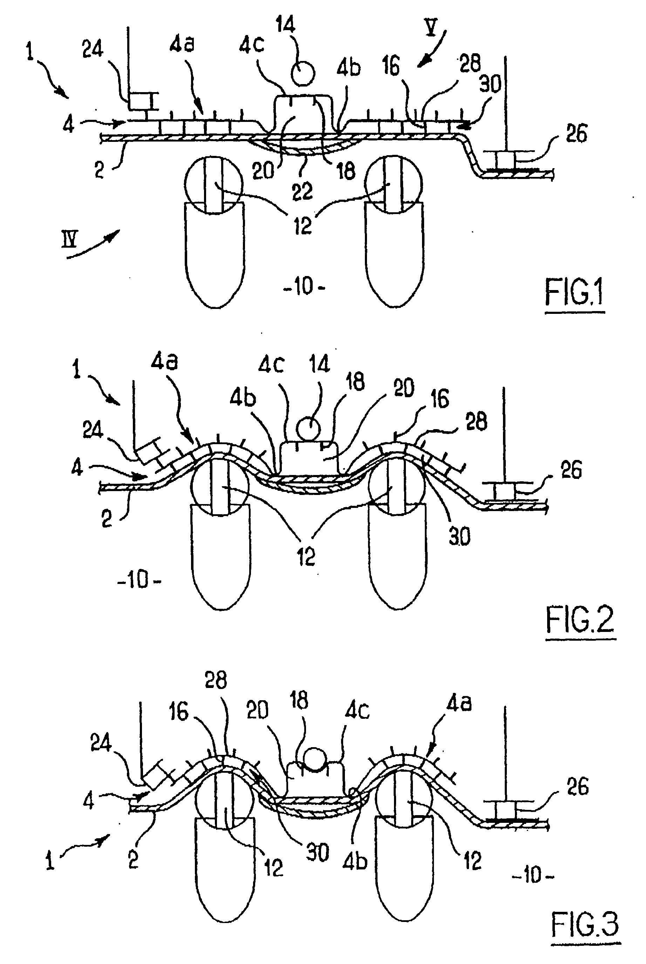

Les figures illustrent partiellement une planche de bord 1 destinée à s'étendre suivant toute la largeur de l'habitacle 10 d'un véhicule dans lequel est disposé un conducteur 12 (seules les cuisses et les genoux du conducteur ont été représentés). Seule la partie de la planche de bord s'étendant sensiblement en regard du conducteur est représentée à la figure 1.

La planche de bord 1 comprend une couche 2 en matériau plastique rigide constituant la partie principale de la planche de bord. Cette couche 2 en matériau plastique rigide s'étend sur toute la largeur de la planche de bord. Elle est doublée dans une zone localisée s'étendant en regard des jambes du conducteur par une plaque d'absorption 4 qu'elle recouvre.

Ladite plaque d'absorption présente une portion principale 4a sensiblement plane, une excroissance 4c formant saillie en direction d'une colonne de direction 14 par rapport à la portion principale 4a et une portion de raccordement 4b s'étendant entre la portion principale 4a et l'excroissance 4c. La plaque d'absorption 4 est constituée d'une seule pièce monobloc injectée comprenant ces trois portions.

L'excroissance 4c présente deux faces latérales 6a, 6b s'étendant sensiblement verticalement, perpendiculairement à la portion principale 4a, entre les jambes du conducteur, d'une face supérieure 8a et d'une face inférieure 8b adjacente s'étendant en direction de la colonne de direction 14. L'excroissance 4c se présente donc sensiblement sous la forme d'un demi-cube découpé suivant la diagonale des faces latérales 6a, 6b.

Ladite portion de raccordement 4b s'étend sensiblement autour de l'excroissance 4c et présente en section une forme en U.

La plaque d'absorption 4 présente une âme de laquelle font saillie des nervures entrecroisées 16 sur chacune de ses faces dans la portion principale 4a. La plaque d'absorption 4 est entièrement recouverte par la couche 2 à laquelle elle est fixée par de multiples points de soudure réalisés entre les nervures 16 et la couche 2. Les nervures 16 maintenant un espace sensiblement constant 30 entre l'âme 28 de la plaque d'absorption 4 et la couche 2 dans la portion principale 4a, cet ensemble constitue un ensemble du type double coque.

Par ailleurs, les faces supérieure 8a et inférieure 8b de l'excroissance 4c présentent des nervures entrecroisées 18 sur la face située du côté opposé à la colonne de direction 14.

La plaque d'absorption 4 et en particulier l'excroissance 4c s'étend entre la colonne de direction 14 et la couche 2. De plus, ladite excroissance 4c de la plaque d'absorption 4étant creuse, elle définit un espace 20 entre la couche 2 et la plaque d'absorption 4.

La planche de bord 1 comprend en outre une plaque de guidage 22 fixée à la couche 2 s'étendant en regard dudit espace 20. La plaque de guidage 22 est sensiblement convexe, vue du conducteur, afin d'écarter les genoux 12 du conducteur de part et d'autre de l'espace 20. Elle est rigide et vient en saillie sur la couche 2, de sorte que ladite couche 2 s'étend entre l'espace 20 et la plaque de guidage 22. En outre, la plaque de guidage 22 assure une fonction d'enjoliveur autour de la colonne de direction et est usuellement dénommée coquille sous volant dans cette fonction.

Ainsi, en cas de choc, les genoux 12 du conducteur viennent au contact de la planche de bord, en regard de la portion principale 4a de la plaque d'absorption 4. La rigidité de la double coque formée par la couche 2 fixée à la plaque d'absorption 4 munie de nervures 16 assure la répartition de l'énergie du conducteur transmise par les genoux 12 dans l'ensemble formé localement par la plaque d'absorption 4 et la couche 2.

Le mouvement de recul de l'excroissance 4c sous l'action des genoux 12 est limité par la présence de la colonne de direction 14. La plaque d'absorption 4 se déforme alors, l'apex du U de la zone de raccordement 4b se déplaçant pour assurer la non-convergence des genoux 12 du conducteur l'un vers l'autre ou vers la colonne de direction 14.

Par ailleurs, la portion principale 4a et la couche 2 se déforment pour absorber l'énergie du conducteur, de même dans une moindre mesure toutefois que l'excroissance 4c.

A moins que le choc ne soit d'une violence exceptionnelle, une partie de l'espace 20 est préservé et la planche de bord offre une force résistante sensiblement constante aux genoux du conducteur 12.

La plaque de renfort 4 est maintenue entre deux éléments d'appui 24, 26 reliés à la structure du véhicule, en particulier la traverse (non représentée). L'élément d'appui 24 est fixé directement à la plaque d'absorption 4, tandis qu'ici l'élément d'appui 26 est fixé à la couche 2, à proximité de la plaque d'absorption 4. Ces éléments d'appui 24, 26 s'opposent en partie au déplacement de la plaque de renfort 4. Toutefois, ils se déforment pour accompagner dans une certaine mesure le mouvement de la plaque d'absorption 4.

Ainsi, du fait de la présence des éléments d'appui 24, 26 et du contact entre l'excroissance 4c et la colonne de direction 14, lors de l'absorption du choc, le genou gauche du conducteur est guidé pour rester en regard de la portion principale 4a entre le point d'appui 24 et la colonne de direction 14, tandis que le genou droit du conducteur est guidé pour rester en regard de la portion principale 4a entre le point d'appui 24 et la colonne de direction 14.

La couche en matériau plastique rigide 2 et la plaque d'absorption 4 sont avantageusement réalisées en polypropylène, éventuellement légèrement renforcé par des fibres. La présence de fibres doit toutefois être limitée pour éviter que la ductilité de la couche en matériau plastique rigide 2 et la plaque d'absorption 4 soit affectée et qu'elles se brisent au lieu de plier sous l'effort.

Bien entendu, l'invention n'est nullement limitée à la réalisation qui vient d'être décrite à titre d'exemple non limitatif. Ainsi, la couche en matériau plastique rigide 2 pourrait être recouverte d'une peau d'aspect et d'une couche de mousse interposée entre la couche en matériau plastique rigide et la peau pour assurer un toucher souple.

En outre, on pourrait prévoir, pour augmenter l'inertie en flexion de la plaque d'absorption 4, de conformer cette plaque, par exemple sous forme ondulée, au lieu de la munir de nervures.

## Revendications

1. Planche de bord (1) destinée à absorber l'énergie d'un occupant (12) d'habitacle (10) de véhicule en cas de choc, laquelle planche de bord comprend une couche (2) en matériau plastique rigide s'étendant continûment sur toute la largeur de l'habitacle du véhicule et une plaque d'absorption (4) en matériau plastique rigide s'étendant en regard de la couche en matériau plastique rigide sur une partie seulement de la planche de bord, ladite plaque d'absorption (4) présente une portion principale (4a) s'étendant sensiblement au contact de la couche (2) en matériau plastique rigide et une portion (4c) formant une excroissance s'étendant à l'écart de la couche (2) en matériau plastique rigide, de sorte à ménager dans cette portion qui est destinée à venir en regard de la colonne de direction (14) du véhicule un espace (20) entre la plaque d'absorption (4) et la couche (2) en matériau plastique rigide pour absorber l'énergie de l'occupant par déformation de la plaque d'absorption.

2. Planche de bord selon la revendication 1, **caractérisée en ce que** ladite plaque d'absorption (4) comprend en outre une portion de raccordement (4b) reliant l'excroissance (4c) à la portion principale (4a) et présentant en section une forme sensiblement en U.

3. Planche de bord selon la revendication 1 ou la revendication 2, **caractérisée en ce que** la plaque d'absorption (4) présente des nervures (16, 18) sur l'essentiel de ses deux faces.

4. Planche de bord selon l'une quelconque des revendications précédentes, **caractérisée en ce que** la plaque d'absorption (4) présente une âme (28) s'étendant, dans la portion principale, sensiblement parallèlement et à l'écart de la couche (2) en matériau plastique rigide, et la plaque d'absorption (4) est fixée à la couche (2) en matériau plastique rigide dans ladite portion principale.

5. Planche de bord selon l'une quelconque des revendications précédentes, **caractérisée en ce que** la plaque d'absorption (4) est constituée d'une pièce monobloc injectée.

6. Planche de bord selon l'une quelconque des revendications précédentes, **caractérisée en ce qu'**elle comprend en outre une plaque de guidage (22) rigide, fixée à la couche en matériau plastique rigide en regard dudit espace (20).

7. Véhicule équipée d'une planche de bord selon l'une quelconque des revendications précédentes, **caractérisé en ce qu'**il comprend deux éléments d'appui (24, 26) liés à la structure du véhicule entre lesquels la plaque de renfort est maintenue.

## Claims

1. Panel board (1) which is to absorb the energy of an occupant (12) of a vehicle passenger space (10) in the case of impact, which panel board comprises a layer (2) of rigid plastics material extending continuously over the entire width of the passenger space of the vehicle, and an absorption plate (4) of rigid plastics material extending opposite the layer of rigid plastics material over only one portion of the panel board, said absorption plate (4) has a main portion (4a) extending substantially in contact with the layer (2) of rigid plastics material and a portion (4c) forming a protuberance extending at a distance from the layer (2) of rigid plastics material, so as to provide in that portion, which is to face the steering column (14) of the vehicle, a space (20) between the absorption plate (4) and the layer (2) of rigid plastics material in order to absorb the energy of the occupant by deformation of the absorption plate.

2. Panel board according to claim 1, **characterized in that** said absorption plate (4) also comprises a connecting portion (4b) linking the protuberance (4c) to the main portion (4a) and having a substantially U-shaped cross-section.

3. Panel board according to claim 1 or claim 2, **characterized in that** the absorption plate (4) has ribs (16, 18) over most of its two faces.

4. Panel board according to any one of the preceding claims, **characterized in that** the absorption plate (4) has a core (28) extending, in the main portion, substantially parallel with and at a distance from the layer (2) of rigid plastics material, and the absorption plate (4) is secured to the layer (2) of rigid plastics material in said main portion.

5. Panel board according to any one of the preceding claims, **characterized in that** the absorption plate (4) is constituted by an injection-moulded integral piece.

6. Panel board according to any one of the preceding claims, **characterized in that** it also comprises a rigid guide plate (22) secured to the layer of rigid plastics material opposite said space (20).

7. Vehicle equipped with a panel board according to any one of the preceding claims, **characterized in that** it comprises two support elements (24, 26) which are connected to the structure of the vehicle and between which the reinforcing plate is held.

## Patentansprüche

1. Armaturenbrett (1), das dazu bestimmt ist, die Energie eines Insassen (12) des Fahrgastraumes (10) eines Fahrzeuges im Fall eines Stoßes zu absorbieren, wobei das Armaturenbrett eine Schicht (2) aus steifem Kunststoffmaterial aufweist, die sich fortlaufend auf der gesamten Breite des Fahrgastraumes des Fahrzeuges erstreckt, und eine Absorptionsplatte (4) aus steifem Kunststoffmaterial, die sich gegenüber der Schicht aus steifem Kunststoffmaterial nur auf einem Teil des Armaturenbrettes erstreckt, wobei die Absorptionsplatte (4) einen Hauptabschnitt (4a) aufweist, der sich im wesentlichen in Kontakt mit der Schicht (2) aus steifem Kunststoffmaterial erstreckt, und einen Abschnitt (4c), der eine Ausstülpung bildet, die sich im Abstand von der Schicht (2) aus steifem Kunststoffmaterial derart erstreckt, daß in diesem Abschnitt, der dazu bestimmt ist, gegenüber der Lenksäule (14) des Fahrzeuges in Position zu kommen, ein Raum (20) zwischen der Absorptionsplatte (4) und der Schicht (2) aus steifem Kunststoffmaterial ausgespart ist, um die Energie des Insassen durch Verformung der Absorptionsplatte zu absorbieren.

2. Armaturenbrett nach Anspruch 1, **dadurch gekennzeichnet, daß** die Absorptionsplatte (4) ferner einen Verbindungsabschnitt (4b) aufweist, welcher die Ausstülpung (4c) mit dem Hauptabschnitt (4a) verbindet und im Querschnitt eine Form im wesentlichen als U aufweist.

3. Armaturenbrett nach Anspruch 1 oder nach Anspruch 2, **dadurch gekennzeichnet, daß** die Absorptionsplatte (4) Rippen (16, 18) auf dem Hauptteil ihrer zwei Seiten aufweist.

4. Armaturenbrett nach einem der vorhergehenden Ansprüche, **dadurch gekennzeichnet, daß** die Absorptionsplatte (4) einen Kern (28) aufweist, der sich in dem Hauptabschnitt im wesentlichen parallel und im Abstand von der Schicht (2) aus steifem Kunststoffmaterial erstreckt, und daß die Absorptionsplatte (4) an der Schicht (2) aus steifem Kunststoffmaterial in diesem Hauptabschnitt befestigt ist.

5. Armaturenbrett nach einem der vorhergehenden Ansprüche, **dadurch gekennzeichnet, daß** die Absorptionsplatte (4) aus einem eingespritzten einstückigen Teil besteht.

6. Armaturenbrett nach einem der vorhergehenden Ansprüche, **dadurch gekennzeichnet, daß** es ferner eine steife Führungsplatte (22) aufweist, die an der Schicht aus steifem Kunststoffmaterial gegenüber dem Raum (20) befestigt ist.

7. Fahrzeug, das mit einem Armaturenbrett nach einem der vorhergehenden Ansprüche ausgestattet ist, **dadurch gekennzeichnet, daß** es zwei Stützelemente (24, 26) aufweist, die mit dem Fahrzeug verbunden sind und zwischen welchen die Verstärkungsplatte gehalten wird.
